# NEUE EUROPÄISCHE PATENTSCHRIFT

(11) **EP 3 285 963 B2**
(45) Veröffentlichungstag und Bekanntmachung des Hinweises auf die Entscheidung über den Einspruch: **14.07.2021**
(45) Hinweis auf die Patenterteilung: 29.08.2018
(21) Anmeldenummer: 17708519.8
(22) Anmeldetag: 03.03.2017
(51) Int. Cl.: B24B 27/00, B24B 41/06, B24B 5/04

(54) **VERFAHREN ZUR SCHLEIF-KOMPLETTBEARBEITUNG VON WELLENFÖRMIGEN WERKSTÜCKEN MIT ZYLINDRISCHEN UND PROFILIERTEN ABSCHNITTEN**
METHOD FOR THE COMPLETE GRINDING OF WORKPIECES IN THE FORM OF SHAFTS HAVING CYLINDRICAL AND PROFILED SECTIONS
PROCÉDÉ POUR L'USINAGE COMPLET PAR MEULAGE DE PIÈCES ONDULÉES PRÉSENTANT DES PARTIES CYLINDRIQUES ET PROFILÉES

(30) Priorität: 15.03.2016 DE 102016204273
(43) Veröffentlichungstag der Anmeldung: 28.02.2018
(73) Patentinhaber: Erwin Junker Maschinenfabrik GmbH, 77787 Nordrach (DE)
(72) Erfinder: JUNKER, Erwin, 77815 Bühl/Baden (DE)
(74) Vertreter: Leske, Thomas
(86) Internationale Anmeldenummer: PCT/EP2017/055049
(87) Internationale Veröffentlichungsnummer: WO 2017/157698

(56) Entgegenhaltungen:
- EP-A2- 0 334 298
- WO-A1-2008/104571
- DE-B4- 19 921 785

## Beschreibung

Die Erfindung betrifft ein Verfahren zum Schleifen von zumindest je einem zylindrischen und profilierten Abschnitt aufweisenden wellenförmigen Werkstücken auf ein und derselben Schleifmaschine als Komplettbearbeitung.

Im Rahmen dieser Erfindung sollen unter wellenförmigen Werkstücken beispielsweise Getriebewellen, Rotoren für Hydraulikpumpen oder Durchflussmengenzähler, Rotoren für Flügelzellenpumpen sowie Rotoren für beispielsweise Kompressoren für Verdichter, Gebläse, Vakuumpumpen oder ähnliche Anwendungsfälle verstanden werden. Die nachfolgend beschriebene Erfindung soll jedoch auch im Sinne einer weiten Auslegung der Bezeichnung wellenförmige Werkstücke auf andere Wellenteile wie Nockenwellen, Kurbelwellen usw. Anwendung finden. Bei bekannten Verfahren zur Schleif-Komplettbearbeitung von wellenförmigen Werkstücken mit zylindrischen und profilierten Abschnitten, wie dies beispielsweise bei Getriebewellen der Fall ist, werden die erforderlichen Einstiche, Planseiten und Durchmesser im Allgemeinen in getrennten Arbeitsfolgen und oft auch in einer Maschine geschliffen. Dagegen werden die gleichfalls an den wellenförmigen Werkstücken zu schleifenden Profilabschnitte bzw. Verzahnungen auf separaten Maschinen geschliffen. Der Einsatz von mehreren, im Herstellungsprozess häufig hintereinander angeordneten Maschinen erfordert eine hohe Investition an Werkzeugmaschinen und zusätzlichen Platzbedarf in den Fertigungshallen. Dies trifft auch für Rotorteile zu, welche zylindrische und Profilabschnitte aufweisen und in ähnlicher Weise für die verschiedenen Anwendungsfälle geschliffen werden.

Es ist jedoch auch bereits bekannt, wellenförmige Werkstücke mit zylindrischen und Profilabschnitten auf einer Maschine zu schleifen. Das Schleifen der zylindrischen Abschnitte bezieht dabei in aller Regel auch das Schleifen von planen Schulterflächen mit ein, welche beispielsweise zwischen benachbarten zylindrischen Außenflächen unterschiedlichen Durchmessers vorhanden sind. In DE 199 21 785 B4 ist ein Verfahren zum Schleifen von konvexen Laufflächen und Außendurchmessern an Wellen mit wenigstens einem scheibenförmigen Wellenabschnitt sowie einer entsprechenden Schleifmaschine zur Durchführung des Verfahrens bekannt. Das zu schleifende Wellenteil soll im Sinne einer Komplettbearbeitung sowohl bezüglich des zylindrischen Abschnittes bzw. der zylindrischen Abschnitte als auch der Profilabschnitte geschliffen werden. Die Profilabschnitte sind bei diesen Verfahren gemäß dem dort beschriebenen Ausführungsbeispiel als ein scheibenförmiger Wellenabschnitt mit konvex gekrümmter Oberfläche beschrieben. Derartige konvex gekrümmte Oberflächen stellen Profilabschnitte dar. Das bekannte Verfahren ist nun darauf gerichtet, dass sämtliche Schleifoperationen, d. h. eine Schleifoperation zum Schleifen der konvexen stirnseitigen Laufflächen an dem scheibenförmigen Wellenabschnitt und eine zweite Schleifoperation zum Schleifen der jeweiligen gewünschten Außendurchmesser bzw. zylindrischen Abschnitte des Wellenteils in einer Aufspannung geschliffen werden. Das bedeutet, dass während der gesamten Schleifbearbeitung das Werkstück zumindest zwischen Spitzen zwischen einem Werkstückspindelstock und einem Reitstock aufgespannt bleibt. Diese Aufspannung wird während der gesamten Bearbeitung also nicht gelöst.

In WO 2012/100 307 A8 ist ein derartiges Verfahren zum Schleif-Komplettbearbeiten von wellenförmigen Werkstücken mit zylindrischen und profilierten Abschnitten beschrieben, wobei es sich bei den profilierten Abschnitten um schraubenförmig ausgebildete Profile für Rotoren von beispielsweise Kompressoren handelt. Bei diesem bekannten Verfahren bleibt das Werkstück während der kompletten Bearbeitung ebenfalls fest eingespannt, so dass die Aufspannung nicht gelöst wird. Unabhängig davon, wie viele Schleifoperationen im Sinne von Vorschleifen, Fertigschleifen, Schleifen eines Lünettensitzes, Schleifen der zylindrischen Abschnitte etc. ausgeführt werden, wird die Aufspannung des Werkstückes zu Beginn der Schleifbearbeitung vorgenommen, und das Werkstück bleibt während der gesamten Schleifbearbeitung in dieser Aufspannung gespannt.

Dies entspricht auch dem heute allgemein bekannten technischen Fachwissen, gemäß welchem die Werkstücke zur Erzielung von engeren Toleranzen und verbesserten Form- und Lageeigenschaften auf einer Maschine in einer einzigen Aufspannung geschliffen werden. Das bekannte Fachwissen geht gegenwärtig davon aus, dass bei jeder Umspannung Fertigungsqualitätseinbußen wegen möglicherweise auftretender Umspannfehler vorhanden sind.

Aus DE 10 2010 005 630 A1 ist der grundsätzliche technische Aufbau einer Maschine beschrieben, mit welcher eine Bearbeitung von wellenförmigen Werkstücken gemäß der zuvor gewürdigten WO 2012/100 307 A8 erfolgen kann. Bei diesem bekannten Schleifzentrum wird zwar vor allen Dingen beschrieben, dass zusätzlich ein Vorratsmagazin mit für die jeweiligen Schleifscheiben zu wechselnden erforderlichen Kühldüsen bzw. Kühldüsensätze angeordnet werden kann, bei der mittels diesem bekannten Schleifzentrum ausgeführten Schleif-Komplettbearbeitung bleibt das Werkstück auch komplett aufgespannt.

Demgegenüber besteht die Aufgabe der Erfindung darin, die Fertigungsgenauigkeit von solchen komplexen Bauteilen wie die hier zu schleifenden wellenförmigen Werkstücke mit zylindrischen und mit profilierten Abschnitten noch weiter zu erhöhen.

Diese Aufgabe wird mit einem Verfahren mit den Merkmalen gemäß Anspruch 1 gelöst. Zweckmäßige Weiterbildungen werden durch die abhängigen Ansprüche definiert.

Gemäß dem erfindungsgemäßen Verfahren zum Schleifen von zumindest je einem zylindrischen und profilierten Abschnitt aufweisenden Werkstücken erfolgt eine derartige Komplettbearbeitung auf ein und derselben Schleifmaschine. Dabei wird das Werkstück in der Schleifmaschine in einer ersten Aufspannung in einer ersten Schleifoperation geschliffen und danach in einer zweiten Schleifoperation geschliffen, nachdem die erste Aufspannung gelöst worden ist und anschließend eine zweite Aufspannung des Werkstückes erzeugt worden ist.

Diese erfindungsgemäße Vorgehensweise, bei welcher nämlich die auf der gleichen Maschine erfolgende Aufspannung zwischen einzelnen Schleifbearbeitungen, und zwar ohne dass das Werkstück aus der Bearbeitungsstation entfernt werden muss, gezielt gelöst und anschließend das Werkstück für seine Weiterbearbeitung wieder fest eingespannt wird, und zwar gemäß der Erfindung mit denselben Spannmitteln. Entgegen der vorherrschenden Meinung gemäß dem Wissen des Durchschnittsfachmannes hat sich in überraschender Weise gezeigt, dass bei einer derartigen Vorgehensweise, bei welcher zwischen den einzelnen Schleifoperationen die Aufspannung bewusst und gezielt gelöst wird, weitere verbesserte Fertigungsqualitäten des Werkstückes nach dem Schleifen, insbesondere in Bezug auf die Maß-, Form- und Lagetoleranzen, erzielt werden kann. Dies hängt u. a. damit zusammen, dass bei der Bearbeitung der Werkstücke z. B. bei unterschiedlichen Schleifaufmaßen beim Zerspanungsprozess eine unterschiedliche Wärmeentwicklung entsteht. Diese variierende Zerspanungswärme kann zu unterschiedlichen Wärmedehnungen oder Verzügen am Werkstück führen, welche durch ein zwischenzeitliches Entspannen der Aufspannung ausgeglichen werden können.

Ein weiterer Grund ist der, dass bei der Herstellung des Rohwerkstückes unterschiedliche Restspannungen im Material vorhanden sind bzw. verbleiben, insbesondere wenn diese Werkstücke vor dem Schleifen noch speziellen Wärmebehandlungen wie beispielsweise Härten ausgesetzt sind. In einem solchen Fall kommen auch geringe Unterschiede innerhalb der zulässigen technischen Toleranzen im Rohwerkstück aus unterschiedlichen Chargen bei der Herstellung zum Tragen, da bei den einzelnen Chargen die Wärmebehandlungsbedingungen nicht 100%ig konstant von Charge zu Charge gehalten werden können.

Ein weiterer Grund für Restspannungen im Werkstück kann daraus resultieren, ob beispielsweise auch Schrottmaterial bei der Herstellung des Rohmaterials bzw. des Rohwerkstückes verwendet wird, was zwar immer noch innerhalb der zulässigen technischen Toleranzen für das Rohwerkstück bzw. den Rohling liegt, aber bei nachfolgenden Bearbeitungsschritten zu zusätzlichen Spannungen und damit im Zusammenhang stehenden Verformungen des Werkstückes führen kann.

Bei den Herstellern der hier in Frage kommenden wellenförmigen Werkstücken mit zylindrischen und Profilabschnitten ist es auch üblich, dass die Werkstoffe für die Rohwerkstücke mit der gleichen Spezifikation von unterschiedlichen Herstellern, oft sogar auch aus unterschiedlichen Ländern, beschafft werden. Auch wenn die Spezifikationen gleich sind, verhalten sich die Werkstücke bei der Schleifbearbeitung insbesondere durch das Freiwerden von Eigenspannungen teilweise recht unterschiedlich. Dieses Problem der bei der Bearbeitung freiwerdenden Eigenspannungen aus dem Materialgefüge führt zwangsläufig dazu, dass die fertigbearbeiteten Werkstücke Abweichungen in deren Maß-, Form- und Lagetoleranzen trotz ansonsten gleichbleibender Schleifprozessparameter aufweisen. Hierbei sind Schwankungen in den Maßen im µm-Bereich bis in den hundertstel mm-Bereich durchaus möglich und üblich. Insbesondere für Rotorwellen, welche in Schraubenrotoren eingebaut werden und als Paar von männlicher und weiblicher Rotorwelle sehr genau miteinander kämmen müssen, sind derartige Schwankungen nicht hinnehmbar, sollen verschleißarmer Betrieb, eine entsprechende Abdichtung beim Abwälzen der Profile und Ähnliches gewährleistet werden. Aber auch die Temperaturdifferenz der Rohwerkstücke, welche der Schleifmaschine zugeführt werden, übt einen Einfluss auf die Genauigkeit aus. Hier wirken sich beispielsweise die Differenzen in den Temperaturen von den der Maschine zugeführten Werkstücken und den Temperaturen im Innenraum der Bearbeitungsmaschine teilweise in nicht mehr vernachlässigbarer Weise aus. Diese Temperaturdifferenzen wirken sich umso stärker aus, je ausgeprägter die schwankenden Rohteiltemperaturen der Werkstücke, die der Bearbeitungsmaschine zugeführt werden, sind.

Ein weiterer wichtiger Punkt, welcher bei der Erzielung einer extrem hohen Genauigkeit derartiger Bauteile von Bedeutung ist, ist die Art der Vorbearbeitung. So können die Rohteile bzw. Rohwerkstücke in der Art ausgeführt sein, dass die Nuten oder Verzahnungen der Profilabschnitte durch Fräsen oder andere spanende Bearbeitungsverfahren bereits vorbearbeitet sind. Bei Gussteilen oder Schmiedeteilen ist es bei größeren Nuten oder Zähnen teilweise auch möglich, dass die Nuten bereits in ihrer prinzipiellen Form vorgegossen bzw. vorgeschmiedet sind, in welchem Fall sie ein höheres Schleifaufmaß als bei z. B. bereits gefrästen Nuten oder Zähnen aufweisen, wenn sie der Schleifmaschine zugeführt werden. Da die sogenannte Gusshaut beim Schleifen abgeschliffen wird, ist die Gefahr von freiwerdenden Spannungen beim Schleifen dort besonders hoch, da beim Abschleifen der Gusshaut deren Eigenspannungen freiwerden. Bei Vermeidung all der zuvor genannten Nachteile gelingt es, die Fertigungsqualität nochmals deutlich zu verbessern. Die verbesserte Fertigungsqualität ergibt sich daraus, dass durch das zwischenzeitliche Lösen der Aufspannung, das im Übrigen so erfolgt, dass die Positionierung des Werkstückes in der Schleifmaschine beibehalten wird, dem Verziehen des Werkstückes aufgrund der oben genannten Gründe bei der Bearbeitung durch das Schleifen sozusagen "nachgegeben" wird. Das bedeutet, dass sich das Werkstück beim Lösen der Spannung zwischenzeitlich entspannen kann, so dass bei nachfolgenden Schleifoperationen wieder an einem entspannten und fest eingespannten Werkstück geschliffen werden kann. Wie bereits beschrieben, resultiert das Verziehen des Werkstückes durch die bei der Bearbeitung der Werkstücke freiwerdenden Spannungen im Gefüge des Werkstoffes. Vor allen Dingen betrifft dies insbesondere die Spannungen an der Oberfläche des Werkstückes an den Stellen, an denen geschliffen wird. Durch das Lösen der Aufspannung des Werkstückes kann bei nachfolgender erneuter Aufspannung und Schleifbearbeitung ein zumindest weitgehend spannungsfreies Werkstück eben dann genauer bearbeitet werden.

Im Allgemeinen werden die Werkstücke zunächst in der Maschine eingespannt, wobei die Werkstücke in der Maschine zwischen den Spitzen fest eingespannt werden, wie dies im Stand der Technik üblicherweise bekannt ist. Um die profilierten Bereiche der Nuten oder Verzahnungen schleifen zu können, muss das Werkstück zusätzlich noch radial spielfrei eingespannt werden. Dies wird vorzugsweise durch ein sogenanntes ausgleichendes Spannfutter realisiert. Bei diesen Spannfuttern ist das Werkstück durch die Spitze im Spannfutter zentriert, und die Spannbacken legen sich im zwischen den Spitzen von Werkstückspindel- und Reitstock eingespannten Zustand ausgleichend an das Werkstück an dessen Durchmesser an, wobei die Spannkraft, die durch diese Spannung aufgebracht wird, das Werkstück ausgleichend und radial steif, d. h. spielfrei, einspannt.

Um das Werkstück während der Bearbeitung programmgesteuert gezielt drehantreiben zu können, ist das Spannfutter auf einer Werkstückspindel fest montiert, wobei das Drehantreiben um die sogenannte C-Achse erfolgt. Um auch das Wellenende, an welchem das Spannfutter das Werkstück spannt, schleifen zu können, kann dieses bzw. können die Spannbacken im geöffneten Zustand zurückgezogen werden. Somit wird das Werkstück an dem schaftseitigen Ende frei, so dass der Spanndurchmesser ebenfalls überschliffen werden kann. Hierbei ist das Werkstück nur noch zwischen den Zentrierspitzen eingespannt. Die Reibung zwischen der angetriebenen Zentrierspitze und dem Zentrum im Werkstück überträgt das zum Schleifen erforderliche Drehmoment zur Rotation des Werkstückes. Das zu schleifende Werkstück wird während der Schleifbearbeitung in der Art eingespannt, dass dieses zwischen den Spitzen eingespannt ist und zur radialen Mitnahme durch das Spannfutter noch ausgleichend fest gespannt wird. Da die Wellenteile im Allgemeinen ein derartiges Durchmesser-Längen-Verhältnis aufweisen, dass diese während der Bearbeitung abgestützt werden müssen, wird vorzugsweise zuerst ein Lünettensitz am Werkstück angeschliffen. Dies ist allerdings nur dann erforderlich, wenn das Durchmesser-Längen-Verhältnis eine zusätzliche Abstützung erfordert.

Gemäß einem ersten Ausführungsbeispiel erfolgt das Schleifen der Durchmesser und der Planseiten vorzugsweise mit einer Schleifscheibe, die für das Schälschleifen ausgeführt ist. Der zylindrische Abschnitt am Werkstück erfolgt vorzugsweise mit einer ersten, nicht zylindrisch ausgebildeten Schleifscheibe durch ein Längsschälschleifen. Der profilierte Abschnitt wird mit einer zweiten, profilierten Schleifscheibe durch Profilschleifen hergestellt. Für das Schleifen der Durchmesser und Planseiten wird die Schleifscheibe vorzugsweise so abgerichtet, dass der sogenannte Anschnitt der Schleifscheibe unter einem Winkel abgerichtet ist. Die Hauptzerspanung beim Schälschleifen findet dabei in dem kurzen, konisch abgerichteten Bereich der Schleifscheibe statt. Der Außendurchmesser der Schleifscheibe zerspant dabei relativ gering, d. h. dessen Oberfläche wird nur noch für das Glätten der Oberfläche verwendet. Mit einer derartigen Schleifscheibe kann auch plangeschliffen werden. Bei achsparalleler Mittelachse der Schleifscheibe in Bezug auf die Mittelachse des Werkstückes verbleibt beim Schleifen von Planseiten ein sogenannter Strahlenschliff auf der geschliffenen Oberfläche. Da dieser Strahlenschliff oft unerwünscht ist, wird weiter vorzugsweise mit einer schräg gestellten Schleifscheibe das entsprechende Werkstück an seinen Durchmessern und Planseiten geschliffen. Das Schleifen der Durchmesserbereiche wird ebenfalls im Schälschleifverfahren durchgeführt. Das Schleifen der Planseiten wird dann mit der schräg abgerichteten Seitenfläche der Schleifscheibe im Schrägeinstechschleifverfahren geschliffen.

Vorzugsweise ist es jedoch auch möglich, mit einer breiter ausgeführten Schleifscheibe, welche zum Schrägeinstechschleifen geeignet ist, mehrere Durchmesser in einem oder mehreren Einstechschleifvorgängen zeitgleich oder nacheinander zu schleifen. In einem solchen Fall erfolgt das Schleifen der Planseiten dabei ebenfalls mit der schräg abgerichteten Seitenfläche der Schleifscheibe.

Vorzugsweise ist die erste Schleifscheibe auf einem ersten Schleifspindelstock angeordnet, und die zweite Schleifscheibe ist weiter vorzugsweise auf einem zweiten Schleifspindelstock angeordnet. Der Vorteil von separaten Schleifspindelstöcken für die erste Schleifscheibe und für die zweite Schleifscheibe besteht darin, dass beim Schleifen eine höhere Flexibilität gegeben ist. Bei Vorhandensein von zwei Schleifspindelstöcken und deren Anordnung zu beiden Seiten des Werkstückes besteht zudem die Möglichkeit, gewisse Abschnitte am Werkstück zumindest teilweise zeitparallel zu bearbeiten. Bei zeitparalleler Bearbeitung entsprechender Bereiche am Werkstück und Anordnung der Schleifspindelstöcke zu beiden Seiten des Werkstückes kann außerdem erreicht werden, dass die beim Schleifen von der einen Schleifscheibe im Werkstück aufgeprägten Schleifkräfte durch die andere Schleifscheibe zumindest in erheblichem Maße kompensiert werden.

Gemäß einem Ausführungsbeispiel wird das Werkstück zwischen Spitzen aufgespannt, welche in den Endseiten des Werkstückes eingebracht sind und dessen Längsachse definieren. Eine der Spitzen ist am Reitstock angeordnet, und die andere Spitze ist am Werkstückspindelstock angeordnet. In der ersten Aufspannung übt die Spitze am Reitstock durch eine axial gerichtete Druckbelastung einen entsprechenden Einspanndruck aus, welcher zumindest für das Schleifen der zylindrischen Abschnitte und/oder der Planseiten ausreichend hoch ist. Die am Reitstock befindliche Spitze kann aus einem Zustand, in welchem die axial gerichtete Druckbelastung auf das Werkstück ausgeübt wird, zum Lösen der Aufspannung in einen drucklosen Zustand überführt werden. In einem solchen drucklosen Zustand greift die Spitze am Reitstock noch in die Zentrierbohrung am Werkstück an der dem Reitstock zugewandten Seite des Werkstückes ein und sichert damit die Ausrichtung des Werkstückes auf der durch die Zentrierbohrungen definierten Längsachse des Werkstückes. Durch den drucklosen Zustand der Spitze am Reitstock erhält das Werkstück die Möglichkeit, gewisse beim Schleifen frei gewordene innere Spannungen auszugleichen, so dass für die nächste Schleifoperation bei erneuter Aufspannung zwischen den Spitzen das Werkstück weitestgehend frei von inneren Spannungen geschliffen werden kann.

Zum Lösen der Aufspannung, d. h. zum Drucklosstellen der Spitze am Reitstock wird die Reitstockspitze längs ihrer Z-Achse bewegt. Sie ist dadurch sozusagen außer Eingriff mit der der Reitstockspitze zuweisenden Zentrierbohrung des Werkstückes. Unter "außer Eingriff" wird in diesem Zusammenhang der drucklose Zustand der Zentrierspitze in der Zentrierbohrung des Werkstückes verstanden, bei welcher ein Drehantrieb über die Aufspannung zwischen den Spitzen für das Werkstück nicht mehr möglich ist.

Beim Schleifen der Profilabschnitte treten in der Regel höhere Schleifkräfte auf, welche durch die jeweilige Schleifscheibe in das Werkstück eingebracht werden. Um nun zu verhindern, dass bei der alleinigen Aufspannung des Werkstückes zwischen Spitzen bei den relativ großen Schleifkräften beim Schleifen der Profilabschnitte die Reibungskräfte an der Spitze am Werkstückspindelstock zur Drehung des Werkstückes möglicherweise nicht mehr zuverlässig ausreichen, ist am Werkstückspindelstock eine zusätzliche Spanneinrichtung vorgesehen, welche das Werkstück am Außenumfang eines zylindrischen Abschnittes zusätzlich spannt. Vorzugsweise spannt die zusätzliche Spanneinrichtung das Werkstück mit ihrem am Umfang des Werkstückes angreifenden Spannbacken. Wenn nun zwischen einzelnen Schleifoperationen beim Profilschleifen, beispielsweise zwischen dem Profilvorschleifen und dem Fertigschleifen des Profils, ein Lösen der ersten Aufspannung vorgenommen wird, so ist zum Zwecke des kompletten Entspannens des Werkstückes, d. h. zum Ausgleichen von dessen beim Schleifen freigesetzten inneren Spannungen, die Spanneinrichtung auch zu lösen, wenn die Spitze am Reitstock drucklos gestellt wird.

Vor allen Dingen bei längeren Werkstücken wird in der ersten Schleifoperation zumindest ein Lünettensitz geschliffen, und es wird in der zweiten Schleifoperation danach der profilierte Abschnitt vorgeschliffen. In einer dritten Schleifoperation werden dann der zylindrische Abschnitt und die am Werkstück vorhandenen Planflächen fertiggeschliffen, woran sich in einer vierten Schleifoperation das Fertigschleifen des profilierten Abschnittes anschließt. Vorzugsweise wird zwischen sämtlichen aufeinanderfolgenden Schleifoperationen die Aufspannung jeweils gelöst und danach das Werkstück wieder gespannt, bevor die jeweils nachfolgende Schleifoperation beginnt.

Nach dem Fertigschleifen des Lünettensitzes wird vorzugsweise eine Lünette zum Abstützen des Werkstückes an diesen Lünettensitz angestellt, nachdem dieser geschliffen worden ist. Das Abstützen mittels einer Lünette ist vor allen Dingen dann von Vorteil, wenn bei längeren Werkstücken Schleifoperationen durchgeführt werden, bei welchen nur eine Schleifscheibe mit dem Werkstück in Eingriff ist. Das Schleifen des Lünettensitzes stellt den ersten Bearbeitungsschritt dar, währenddessen das Werkstück in der Maschine fest eingespannt ist, d. h. sich in der ersten Aufspannung befindet. Nach dem Schleifen des Lünettensitzes werden dann weitere Durchmesser mit gegebenenfalls dazwischen befindlichen Planflächen vorgeschliffen oder sogar gleich fertiggeschliffen. Das Schleifen der Durchmesser umfasst je nach Werkstückgeometrie auch das Schleifen von den einzelne Durchmesserbereiche unterschiedlichen Durchmessers miteinander verbindenden Planflächen.

Der vorliegenden Erfindung liegt der Gedanke zugrunde, dass durch das Lösen der Aufspannung zwischen nacheinander ablaufenden Schleifoperationen bei gleichzeitiger Gewährleistung des Haltens des zu schleifenden Werkstückes auf der durch die Spitzen am Werkstückspindelstock und am Reitstock sowie die in den Stirnseiten des Werkstückes vorhandenen Zentrierbohrungen definierte Längsachse innere Spannungen abgebaut werden, welche Längsachse die für das Schleifen in Bezug genommene Referenzachse darstellt. Bei nachfolgenden Schleifoperationen am Werkstück kann dann frei von derartigen inneren Spannungen oder bei zumindest deutlich reduzierten inneren Spannungen geschliffen werden. Das sich nach dem jeweiligen Lösen der Aufspannung anschließende weitere Schleifen bei Vorhandensein eines im werkstücksinternen im Wesentlichen spannungsfreien Zustandes führt jedenfalls zu verbesserten Schleifergebnissen, und zwar entgegen der vorherrschenden Meinung, gemäß welcher das Werkstück nach Möglichkeit während der gesamten Schleifoperationen fest und ohne zwischenzeitliches Lösen der Aufspannung in dieser Aufspannung gehalten werden soll.

Das Lösen der reitstockseitigen Spitze kann auch in der Art erfolgen, dass die Spitze um einen gewissen Betrag zurückgezogen wird, d. h. nicht mehr im Zentrum anliegt. Hierbei wird das Werkstück in diesem Zustand dann auf sogenannten Vorablageprismen aufliegen und anschließend wieder eingespannt. Durch diese Vorgehensweise wird der gleiche technische Effekt wie in der zuvor beschriebenen Vorgehensweise erreicht.

Weitere Vorteile und Ausgestaltungen des erfindungsgemäßen Verfahrens werden nun detailliert in den folgenden Figuren beschrieben. In der Zeichnung zeigen:
- Figur 1:: eine Draufsicht auf eine Schleifmaschine zur Durchführung des erfindungsgemäßen Verfahrens mit einem Schleifspindelstock und einer Station zur Aufspannung eines Werkstückes;
- Figur 2:: eine Draufsicht auf eine Schleifmaschine zur Durchführung des erfindungsgemäßen Verfahrens mit zwei Schleifspindelstöcken und einer Station zur Aufspannung eines Werkstückes;
- Figur 3:: eine Teil-Draufsicht eines für die Durchführung des erfindungsgemäßen Verfahrens zwischen Spitzen aufgespannten Werkstückes vor Beginn des Schleifens eines Lünettensitzes;
- Figur 4A:: eine Teil-Draufsicht gemäß Figur 3 beim Vorschleifen des Profilabschnittes in Form von einer Verzahnung oder Nuten mit abstützender Lünette;
- Figur 4B:: eine Teilansicht in Richtung A des Werkstückes gemäß Figur 4A während des Schleifens seines Profilabschnittes;
- Figur 4C:: eine Teilschnittansicht B-B gemäß Figur 4B während des Schleifens des als Geradlängsnuten ausgebildeten Profilabschnittes des Werkstückes;;
- Figur 5:: eine Teil-Draufsicht gemäß Figur 3 beim Fertigschleifen der zentrischen Durchmesser und der Planseiten des Werkstückes gemäß dem erfindungsgemäßen Verfahren;
- Figur 6:: eine Teil-Draufsicht gemäß Figur 3 beim Fertigschleifen der Verzahnung oder der Nuten des Werkstückes gemäß dem erfindungsgemäßen Verfahren; und
- Figur 7:: Beispiele von mit dem erfindungsgemäßen Verfahren schleifbaren Werkstücken mit zylindrischen, Planschulter- und Profilabschnitten.

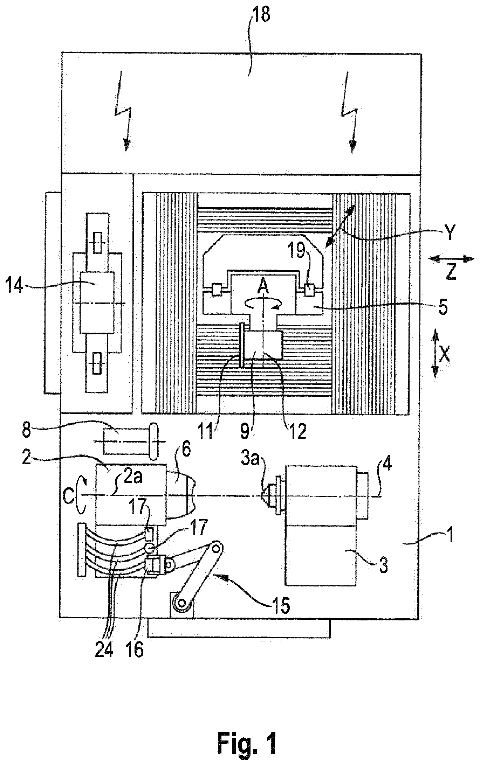

In Figur 1 ist eine Draufsicht auf eine Schleifmaschine zur Durchführung des erfindungsgemäßen Verfahrens gezeigt, bei welchem ein Werkstück so aufgespannt wird, dass es die Durchführung des erfindungsgemäßen Verfahrens zur Schleifkomplettbearbeitung für wellenförmige Werkstücke bzw. Wellenteile 10 ermöglicht. Die in Draufsicht dargestellte Schleifmaschine weist als Schleifzentrum einen Maschinenständer 1, einen auf dem Maschinenständer 1 angeordneten Werkstückspindelstock 2 mit CNC-gesteuerter C-Achse und einen Reitstock 3 auf. Zwischen dem Werkstückspindelstock 2 und dem Reitstock 3 ist das nicht dargestellte Werkstück so aufgespannt, dass dessen geometrische Längsachse mit der Spann- und Rotationsachse 4 zusammenfällt. Ein Kreuzschlitten ist parallel, was durch den als Z-Achse gekennzeichneten Doppelpfeil angedeutet ist, und rechtwinklig, was durch den als X-Achse bezeichneten weiteren Doppelpfeil angedeutet ist, zu der Rotationsachse 4 des Werkstücks CNC-gesteuert verfahrbar. Der Kreuzschlitten trägt über senkrechte Führungsbahnen 19, CNC-gesteuert verfahrbar, was durch die ebenfalls als Doppelpfeil angedeutete Y-Achse dargestellt ist, einen ersten Schleifspindelstock 5, an welchem eine Schleifspindel 9 mit einer Schleifscheibe 11 befestigt ist. Eine weitere CNC-gesteuerte Verstellmöglichkeit besteht durch eine horizontale, rechtwinklig zur Rotationsachse 4 des Werkstücks angeordnete CNC-gesteuerte Schwenkachse 12, welche als A-Achse gekennzeichnet und dargestellt ist.

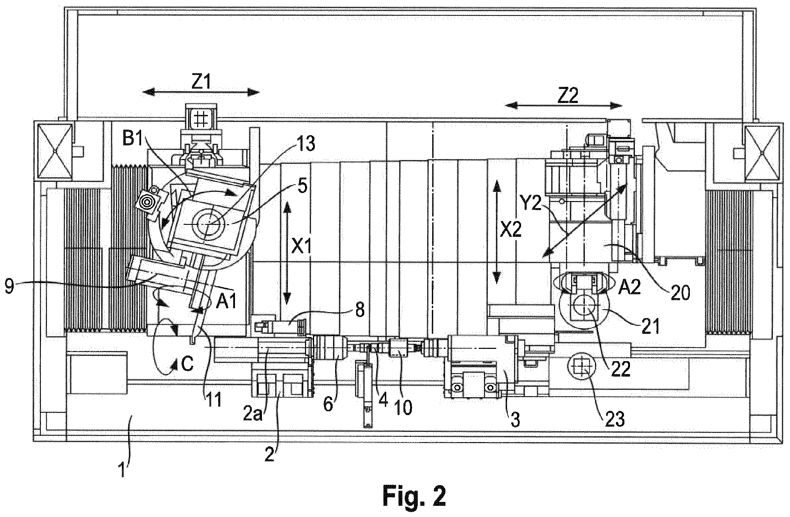

Damit Schleifscheiben im Schrägeinstechschleifverfahren zum Schleifen von zylindrischen oder konischen Bereichen an dem Wellenteil eingesetzt werden können, ist vorzugsweise über dem Schlitten für die Z-Achse eine Schwenkachse vorgesehen, welche eine vertikal angeordnete Schwenkachse 13 besitzt und in Figur 2 als B-Achse bezeichnet ist. In Figur 1 ist diese Schwenkachse nicht dargestellt, da sie nur zum Schleifen mit schräg angestellter Schleifscheibe 11 für das Schälschleifen oder Schrägeinstechschleifen erforderlich ist. Das bedeutet, es kann im Schrägeinstechschleifverfahren geschliffen werden, oder es können auch Konen durch Einschwenken der B-Achse geschliffen werden. Falls diese B-Achse, d. h. die Schwenkachse 13, nicht vorhanden ist, ist es jedoch auch möglich, diese Bearbeitung von oben auf den Wellendurchmesser vorzusehen.

Ferner ist eine Abrichtspindel 8 vorgesehen, welche ein Diamantrad trägt und zum Abrichten der Schleifscheibe 11 eingesetzt wird. Des Weiteren ist eine Einrichtung 14 zum Wechseln der Schleifscheibe 11 dargestellt. Die Schleifscheiben sind dabei in einem Halter in der Art eines Magazins aufgenommen und werden mittels des Umsetzungsroboters 15 aus dem Magazin der jeweiligen Schleifspindel zugeführt. Der Umsetzungsroboter 15 weist eine Greifereinheit 16 auf, mittels welcher er aus dem Vorratsmagazin je nach Bedarf die gewünschte Schleifscheibe und wahlweise dazu einen zur Schleifscheibe gehörigen bestimmten Kühldüsensatz 17 entnimmt und beides in den Bereich der Wirkstellung der Schleifscheibe an dem Werkstück zuführt. Es ist auch möglich, dass der Kühldüsensatz 17 unabhängig von der Schleifscheibe mit dem Umsetzungsroboter ergriffen wird und an die Schleifeingriffsstelle geführt wird, was während des Schleifens erfolgen kann.

Im hinteren Bereich der Schleifmaschine, in Figur 1 oben dargestellt, ist ein Schaltschrank 18 vorgesehen, welcher die CNC-Steuerung der Schleifmaschine beinhaltet, mit welcher die Schleifmaschine gesteuert wird.

In Figur 2 ist eine Draufsicht auf eine Schleifmaschine zur Durchführung des erfindungsgemäßen Verfahrens gezeigt, welche einen ersten Schleifspindelstock 5 und einen zweiten Schleifspindelstock 20 aufweist. Dabei ist lediglich der Grundaufbau der Schleifmaschine in der Draufsicht gezeigt. Bei diesem Schleifzentrum sind auf einem Maschinenständer 1 ein Werkstückspindelstock 2 und ein Reitstock 3 angeordnet. Zwischen dem Werkstückspindelstock 2 und dem Reitstock 3 ist die Spann- und Rotationsachse 4 für das Werkstück 10 ausgebildet, welche mit der Längsachse des Werkstücks zusammenfällt. Auf einer Werkstückspindel 2a des Werkstückspindelstocks 2 (C-Achse) ist ein Spannfutter 6 montiert, welches eine zentrisch umlaufende Spitze, welche nicht gezeigt ist, aufnimmt und zusätzlich ausgleichende Spannbacken 6a (ebenfalls nicht gezeigt) besitzt. Diese Spannbacken spannen das Werkstück an dessen Umfang fest ein. Dieses Spannfutter ist vor allen Dingen dazu vorgesehen, größere Antriebsmomente in das Werkstück einzuleiten. Dies ist beispielsweise zumindest beim Schleifen der Profilabschnitte des Werkstücks 10 erforderlich. Um die Rundlauffehler bezüglich des durch die Spann- und Rotationsachse 4 ausgebildeten Zentrums so wie alle anderen Maß-, Form- und Lagetoleranzen an der Spannstelle ausgleichen zu können, sind die Spannbacken 6a des Spannfutters 6 ausgleichend ausgeführt. Solche Anwendungsfälle für Spannfutter sind im Stand der Technik bereits bekannt, sodass auf die Beschreibung von dessen Wirkungsweise hier verzichtet wird.

Ein erster Kreuzschlitten, welcher in Figur 2 links dargestellt ist, ist parallel, was durch die Z1-Achse in Form eines Doppelpfeils dargestellt ist, und rechtwinklig, was in Figur 2 links durch die X1-Achse in Form ebenfalls eines Doppelpfeils dargestellt ist, zur Rotationsachse 4 des Werkstücks 10 CNC-gesteuert verfahrbar. Der erste Kreuzschlitten trägt einen ersten Schleifspindelstock 5, an dem eine erste Schleifspindel 9 mit einer ersten Schleifscheibe 11 befestigt ist. Weitere CNC-gesteuerte Verstellmöglichkeiten sind dadurch gegeben, dass eine horizontale Verstellmöglichkeit zur Werkstück-Längsachse 4 (A1-Achse) und eine Verstellungsmöglichkeit über die vertikal rechtwinklig zur Rotationsachse 4 des Werkstücks 10 angeordnete CNC-gesteuerte Schwenkachse (B1-Achse) vorhanden sind. Im vorderen Bereich von Figur 2 ist die erste Schleifspindel 9 montiert dargestellt, welche zur Aufnahme der Schleifscheibe 11 dient. Auf dieser Schleifspindel 9 können durch eine nicht dargestellte Schleifscheibenwechsel-Vorrichtung die Schleifscheiben 11 vollautomatisch programmgesteuert gewechselt werden. Zu der Schleifscheibe muss dann in bekannter Art und Weise die passende Kühlschmiermitteldüse bzw. der passende Kühlschmiermitteldüsensatz mitausgetauscht werden, was in Figur 2 nicht gesondert dargestellt ist.

Mit dem in Figur 2 links dargestellten ersten Schleifspindelstock 5 werden die zylindrischen Durchmesser und die Planflächen am Werkstück 10 geschliffen.

Des Weiteren ist in Figur 2 linksseitig achsparallel zur Werkstückspindel 2a (C-Achse) eine Abrichtspindel 8 angeordnet, welche mit ihrem Diamantrad dem Abrichten der ersten Schleifscheibe 11 des ersten Schleifspindelstocks 5 dient. Die Einrichtung zum Wechseln der Schleifscheibe 11 ist in Figur 2 nicht separat dargestellt. Die Schleifscheiben 11 des ersten Schleifspindelstocks 5 dienen zum Schleifen der Schaftteile bzw. der zylindrischen Abschnitte an dem Wellenteil, d. h. es werden mit diesen Schleifscheiben sämtliche Außendurchmesser für die zylindrischen Abschnitte, konusförmige Abschnitte und ähnliche Konturen geschliffen.

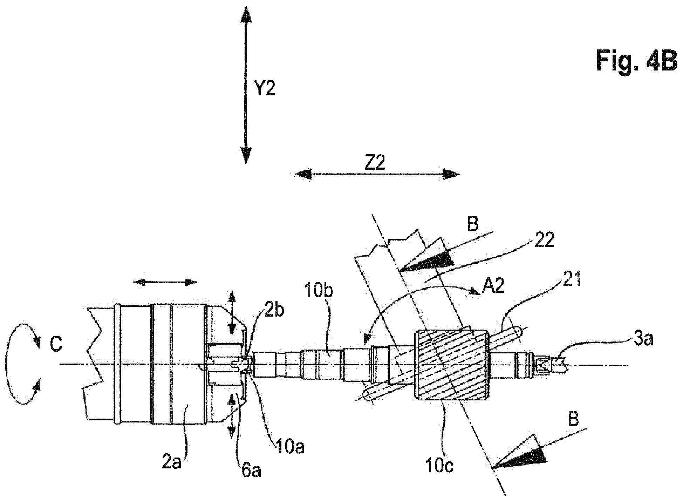

In Figur 2 ist auf der rechten Seite ein zweiter Kreuzschlitten parallel, was als Z2-Achse mit einem Doppelpfeil gekennzeichnet ist, und rechtwinklig, was in Figur 2 als X2-Achse ebenfalls mit Doppelpfeil dargestellt ist, zu der Rotationsachse 4 des Werkstücks 10 CNC-gesteuert verfahrbar. Dieser zweite Kreuzschlitten trägt einen senkrecht CNC-gesteuert verfahrbaren (Y2-Achse) zweiten Schleifspindelstock 20, an dem eine Schleifspindel 22 mit einer zweiten Schleifscheibe 21 befestigt ist. Eine weitere CNC-gesteuerte Verstellmöglichkeit besteht durch eine horizontal, zur Rotationsachse 4 des Werkstücks 10 angeordnete CNC-gesteuerte Schwenkachse, welche in Figur 2 als A2-Achse dargestellt ist. Im vorderen Bereich der Schleifmaschine gemäß Figur 2 ist eine Schleifspindel montiert, welche zur Aufnahme von der Schleifscheibe 21 dient. Auf dieser Schleifspindel 22 (siehe Figur 4B) können durch eine ebenfalls nicht dargestellte Schleifscheibenwechsel-Vorrichtung diese Schleifscheiben vollautomatisch programmgesteuert gewechselt werden. Zu der zweiten Schleifscheibe 21 wird dann - sofern es erforderlich ist - in bekannter Art und Weise die passende Kühlschmiermitteldüse bzw. der passende Kühlschmiermitteldüsensatz mitausgetauscht, was jedoch ebenfalls nicht gesondert dargestellt ist.

Eine zweite Abrichtvorrichtung 23 zum Abrichten der Schleifscheibe 21 für den in Figur 2 rechts angeordneten Schleifspindelstock 20 ist in der Schleifmaschine vorn auf der rechten Maschinenseite vorgesehen.

Im hinteren Bereich der Schleifmaschine ist der in Figur 2 nicht dargestellte Schaltschrank angeordnet, welcher die komplette elektrische Steuerung der Maschine aufnimmt.

Zum Schleifen werden die jeweiligen Werkstücke 10 der Schleifmaschine in an sich bekannter Weise beispielsweise über ein innenliegendes Ladeportal oder durch ein über der Schleifmaschine angeordnetes Ladeportal im Sinne eines Be- oder Entladevorgangs zugeführt bzw. aus der Maschine entnommen.

Der in den Figuren 1 und 2 dargestellte prinzipielle Aufbau einer Schleifmaschine dient der Durchführung des erfindungsgemäßen Verfahrens, weil mit diesem grundsätzlichen Aufbau der Schleifmaschine die Komplettbearbeitung des zylindrische Abschnitte, Planseiten und Profilabschnitte aufweisenden Werkstücks derart realisierbar ist, dass durch die Bearbeitung bzw. während der Bearbeitung im Werkstück freigesetzte innere Spannungen zwischen Schleifoperationen abgebaut bzw. kompensiert werden können, sodass nachfolgende Schleifoperationen stets an einem von inneren Spannungen zumindest weitgehend befreiten Werkstück durchgeführt werden können. Der Ablauf des erfindungsgemäßen Verfahrens wird nun anhand der nachfolgenden Figuren detailliert erläutert.

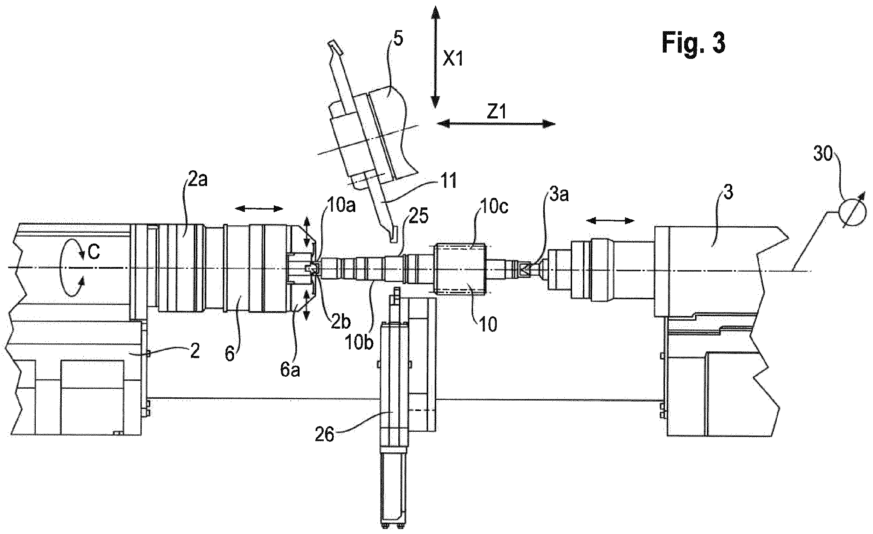

In Figur 3 ist eine Teil-Draufsicht eines Teils der das erfindungsgemäße Verfahren realisierenden Schleifmaschine dargestellt, bei welchem das Werkstück zwischen Spitzen aufgespannt wird, bevor das Schleifen eines Lünettensitzes ausgeführt wird. In Figur 3 wird diese Komplettbearbeitung eines Werkstücks 10 in Form eines Wellenteils prinzipiell dargestellt. Dieses Wellenteil wird zwischen einem Werkstückspindelstock 2 mit CNC-gesteuerter C-Achse und einem Reitstock 3 in einer Aufspannung zwischen Spitzen 2b, 3a aufgenommen. Um das erforderliche Drehmoment bei den Schleifoperationen, und zwar insbesondere für das Schleifen der Profilabschnitte, aufzubringen, ist an einem schaftseitigen Wellenende 10a ein aus dem Stand der Technik an sich bereits bekanntes, ausgleichendes und axial zurückziehbares Spannfutter 6 auf der Werkstückspindel 2a mitaufgenommen. In der ausgefahrenen Stellung des Spannfutters 6 bzw. seiner Spannbacken 6a kann an dem schaftseitigen Wellendende 10a des Werkstücks 10 dieses fest eingespannt werden, sodass sehr hohe radiale Drehmomente auf das Werkstück 10 während der Schleifbearbeitung übertragen werden. Dies wird beim Schleifen der Profilabschnitte 10c in Form von Nut- oder Zahngeometrien in den meisten Fällen erforderlich sein. Gemäß der Darstellung in Figur 3 sind die Spannbacken 6a des Spannfutters an den Spannbereich des Werkstücks, d. h. an dessen schaftseitigem Wellenende angelegt. Daher kann in einem solchen gespannten Zustand die zylindrische Außenkontur dieses schaftseitigen Wellenendes nicht geschliffen werden. Es ist daher erforderlich, dass zum Schleifen dieses Spannbereiches die Spannbacken 6a vom Werkstück 10 gelöst werden und das Spannfutter mit seinen Spannbacken 6a zurückgezogen wird. Zum Schleifen dieser zylindrischen Außenbereiche bleibt das Werkstück jedoch zwischen den Spitzen 2b, 3a fest eingespannt. Dabei erfolgt die Mitnahme des Werkstücks 10 zu dessen Rotation durch die Reibung zwischen der Zentrierspitze 2b am Spannfutter und dem im Werkstück 10 vorhandenen Zentrum, in welches diese Zentrierspitze 2b eingreift. Auf der dem Werkstückspindelstock gegenüber liegenden Seite ist ein Reitstock 3 vorgesehen, welcher durch vorzugsweise hydraulische Betätigung in das der Zentrierspitze 3a des Reitstocks 3 zugewandten Seite angeordnete Zentrum eingreift. Die Reitstockspitze 3a ist in axialer Richtung des Werkstücks bewegbar, sodass bei entsprechender Ausbildung eines Axialdrucks das Werkstück in zentrierter Weise zwischen den beiden Zentrierspitzen 2b und 3a so gehalten wird, dass eine rotatorische Mitnahme durch den Werkstückspindelstock 2 gewährleistet ist.

Das Schleifen eines Lünettensitzes 25 erfolgt nun in der in Figur 3 dargestellten Art und Weise nach dem Schälschleifverfahren mit schräg angestellter Schleifscheibe 11. Nach Beendigung dieser Schleifoperation des Schleifens des Lünettensitzes wird die Aufspannung des Werkstücks 10 gelöst, sodass sich das Werkstück entspannen kann und die inneren Spannungen freiwerden. Zusätzlich wird das Spannfutter mit seinen Spannbacken vom Werkstück gelöst. In diesem Zustand ist die Reitstockspitze 3a drucklos gestellt und liegt im Zentrum des Wellenteils nur an. Dadurch ist das Werkstück nicht mehr fest eingespannt, gleichwohl ist aber seine zentrierte Lage bezogen auf die Spann- und Rotationsachse 4, d. h. die geometrische Längsachse 4 des Werkstücks, beibehalten. Ein Verlust an Genauigkeit kann nicht auftreten, vielmehr wird die Genauigkeit des Schleifergebnisses dadurch erhöht, dass zwischen den zwei aufeinander abfolgenden Schleifoperationen das Werkstück eine Möglichkeit hat, sich zu entspannen, sodass nachfolgende Schleifoperationen an einem entspannten, d. h. von innerer Spannung im Wesentlichen freien Werkstück geschliffen werden können.

Prinzipiell wäre es auch denkbar, die Reitstockspitze 3a komplett aus dem Zentrum für die Aufspannung zu lösen; in einem solchen Fall müsste jedoch durch beispielsweise einen zusätzlichen Greifer oder eine weitere Abstützung dafür Sorge getragen werden, dass das Werkstück In diesem Zustand abgestützt ist. Nachdem der Entspannungsvorgang vorgenommen worden ist, währenddessen selbstverständlich der Schleifvorgang unterbrochen ist, erfolgt ein erneutes Aufspannen des Werkstücks, sodass sich eine nachfolgende Schleifoperation anschließen kann.

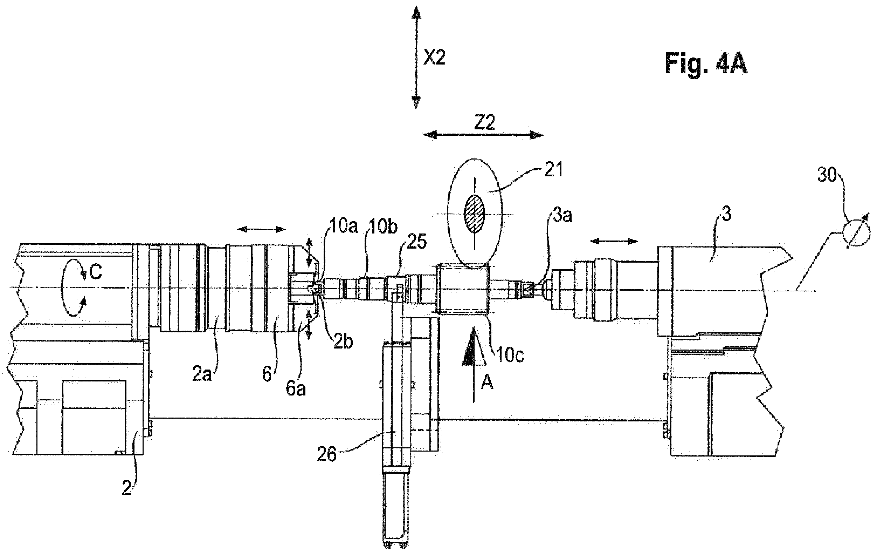

In Figur 4A ist eine Teil-Draufsicht gemäß Figur 3 beim Vorschleifen des Profilabschnitts in Form einer Verzahnung oder von Nuten mit angestellter/abstützender Lünette gezeigt. Das Vorschleifen des Profilabschnitts 10c erfolgt mittels einer galvanisch belegten Schleifscheibe 21. Dies erfolgt in an sich bekannter Weise durch interpolierendes Verfahren über die CNC-gesteuerte Achse beziehungsweise mittels der CNC-gesteuerten Achsen. Bezüglich der zu erzielenden Genauigkeit sind die galvanisch belegten Schleifscheiben 21 zum Vorschleifen gut geeignet, vor allen Dingen auch weil sie ein sehr hohes Zerspanvolumen pro Zeiteinheit realisieren können.

Nach dieser Schleifoperation als Vorschleifen des Profilabschnitts 10c wird die Aufspannung des Werkstücks zum Ausgleich der im Werkstück durch das Schleifen gegebenenfalls vorhandenen inneren Spannungen gelöst, und zwar in der Art, dass die Spannbacken 6a des Spannfutters 6 gelöst und die Reitstockspitze 3a nur noch drucklos im Zentrum des Wellenteils 10 verharrt. Dadurch ist das Werkstück nicht mehr fest eingespannt, behält aber seine definierte Lage bei, was bezüglich der Genauigkeit für nachfolgende Schleifoperationen von Bedeutung ist. Nach erfolgtem Entspannen des Werkstücks 10 wird dieses wieder in bekannter Weise fest eingespannt, nachdem durch das Lösen der Aufspannung die inneren Spannungen im Werkstück frei geworden sind. Das Entspannen des Werkstücks ist dabei vorzugsweise sowohl nach dem Vorschleifen als auch nach dem Fertigschleifen einzelner Abschnitte sinnvoll, jedenfalls so lange, wie die Komplettbearbeitung am Werkstück noch nicht abgeschlossen ist.

In Figur 4a ist nun das zwischen den Spitzen 2b und 3a bei gleichzeitig angelegtem Spannfutter 6 mit dessen Spannbacken 6a eingespannten Werkstücks 10 gezeigt. Das Werkstück weist ein schaftseitiges Wellenende 10a, zylindrische Abschnitte 10b, welche durch Planseiten abgegrenzt sind, und Profilabschnitte 10c auf. An einem geschliffenen Lünettensitz 25 ist eine Lünette 26 zum Abstützen des relativ langen wellenförmigen Werkstücks angestellt. Das Spannfutter 6 mit der innenliegenden Zentrierspitze 2b ist auf der Werkstückspindel 2a des Werkstückspindelstocks 2 befestigt. Wenn - wie in Figur 4A gezeigt - der Profilabschnitt 10c mittels der Schleifscheibe 21 geschliffen wird, bleibt die Spanneinrichtung 6 mit ihren Spannbacken 6a am schaftseitigen Wellenende 10a gespannt. Um die entsprechenden Profilabschnitte schleifen zu können, ist die Schleifscheibe 21 über ihren nicht dargestellten Schleifspindelstock und die auf dem Schleifspindelstock die Schleifscheibe 21 tragende Schleifspindel über die beiden Achsen X2 und Z2 entsprechend der geometrischen Form des Profilabschnitts zustellbar.

Am Reitstock 3 ist eine Andrucksteuerung 30 dargestellt, mittels welcher der axiale Druck der Reitstockspitze 3a auf das am stirnseitigen Ende des Werkstücks angeordnete Zentrum vorwählbar in der CNC-Steuerung einstellbar ist. Dieser axiale Druck dient der Sicherung der Spannkräfte während des Schleifvorganges. Zum Entspannen wird die Reitstockspitze 3a in ihrem zugehörigen Zentrum des Werkstücks 10 druckfrei gestellt, mithin das Werkstück spannungsfrei bezüglich seiner Aufspannung gemacht.

Figur 4B zeigt eine Teilansicht in Richtung A des Werkstücks, welche dem Schleifzustand gemäß 4A entspricht, und zwar während des Schleifens seines Profilabschnitts.

Die in Figur 4B dargestellte Spannsituation entspricht dabei derjenigen gemäß Figur 4A. Gemäß dieser Teilansicht wird das Werkstück 10 gerade am Profilabschnitt 10c geschliffen. Die Verstellachsen A2, Y2 und Z2 sind durch jeweilige Doppelpfeile dargestellt. Das Werkstück ist im Vordergrund als zwischen den Spitzen 2b und 3a gehalten dargestellt. Die Schleifscheibe 21 zum Schleifen des Profilabschnitts 10c ist bezüglich der Zeichnungsebene gemäß Figur 4B hinter dem Werkstück dargestellt und mit ihrer Schleifspindel 22 so geneigt, dass die schräg verlaufenden Geradnuten im Profilabschnitt 10c durch eine entsprechende interpolierende Arbeitsweise zwischen den Achsen Z2 und C geschliffen werden können.

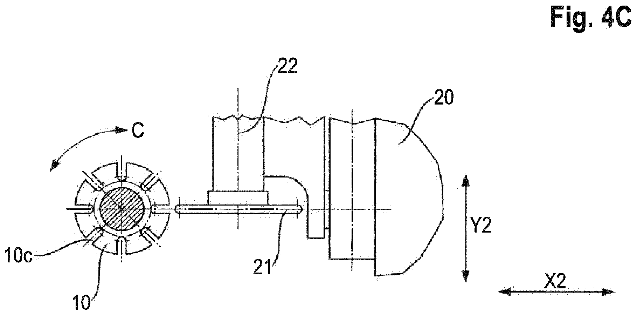

In Figur 4C ist nun die Schleifsituation gemäß Figur 4B bezogen auf die Schnittebene B-B dargestellt. An dem Werkstück 10 ist der Profilabschnitt 10c in Form einer Verzahnung oder umfangsmäßig verteilt mehrerer sich in Längsrichtung des Werkstücks erstreckenden Nuten gezeigt. Die Schleifscheibe 21 ist von ihrer Schleifspindel 22 aufgenommen und in den Schrägungswinkel der schräg verlaufenden Verzahnung CNC-gesteuert über die A2-Achse einschwenkbar. Schematisch sind auch die C, Y2- und die X2-Achsen durch jeweilige Doppelpfeile dargestellt. Je nach Erfordernis kann mit dem erfindungsgemäßen Verfahren ein Profilabschnitt auch mit gekrümmt verlaufenden Nuten wie bei Schraubenrotoren geschliffen werden.

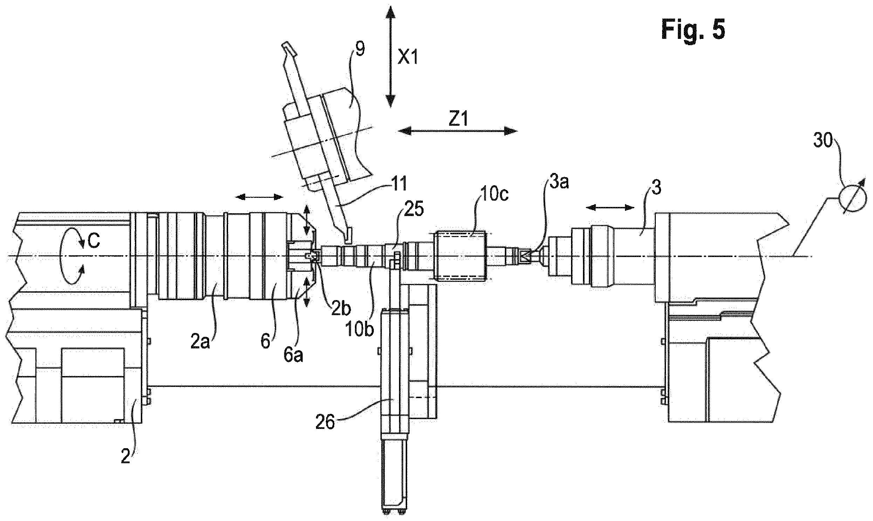

Figur 5 zeigt eine Teil-Draufsicht gemäß Figur 3 beim Fertigschleifen der zylindrischen Abschnitte und der Planseiten des Werkstückes gemäß dem erfindungsgemäßen Verfahren. Der grundsätzliche Aufbau entspricht dem gemäß Figur 3, so dass dieser grundsätzliche Aufbau hier nicht nochmals ausgeführt wird.

Das Grundprinzip ist, dass während der durchgeführten Schleifoperation das Werkstück aufgespannt bleibt, nach dieser jedoch die Aufspannung gelöst wird, damit innere Spannungen im Werkstück freigesetzt werden können und für nachfolgende Schleifoperationen ein spannungsfreier Zustand des Werkstückes gewährleistet werden kann. Das Fertigschleifen der betreffenden Abschnitte erfolgt in der gemäß Figur 5 dargestellten Version nach dem Schälschleifverfahren mit schräggestellter Schleifscheibe 11. Es ist prinzipiell auch möglich, dass das Schleifen dieser Abschnitte auch mit schräggestellter Schleifscheibe 11 so erfolgen kann, dass mehrfach eingestochen werden muss. In diesem Fall werden die zylindrischen Abschnitte im Schrägeinstechschleifverfahren geschliffen. Nachdem die zylindrischen Abschnitte fertiggeschliffen worden sind, erfolgt wiederum ein Entspannen des Werkstückes 10, d. h. nach dieser Schleifoperation wird die Aufspannung des Werkstückes 10 zu dessen Entspannung gelöst, und zwar in der Art, dass die Spannbacken 6a des Spannfutters 6 gelöst und die Reitstockspitze 3a nur noch drucklos im Zentrum des Wellenteils 10 anliegt. Dadurch ist das Werkstück nicht mehr gespannt, so dass die beim Schleifen freigesetzten bzw. erzeugten inneren Spannungen freigesetzt werden und bei erneutem Schleifen ein von inneren Spannungen freier Bearbeitungszustand für das Werkstück vorhanden ist.

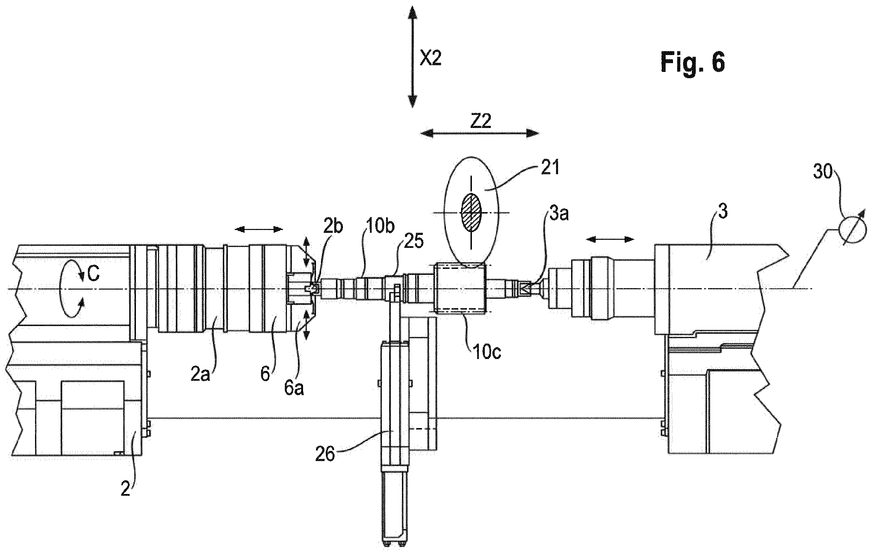

In Figur 6 ist eine Seitenansicht des Bereichs der Schleifmaschine gezeigt, in welchem das Werkstück aufgespannt ist, und zwar beim Schleifen des Profilabschnittes 10c gemäß dem erfindungsgemäßen Verfahren.

Der grundsätzliche Aufbau und die Vorgehensweise beim Schleifen bzw. zwischen einzelnen Schleifoperationen entspricht dem zuvor Beschriebenen bezüglich insbesondere der Figuren 3 und 5, so dass dieser grundsätzliche Aufbau nicht nochmals beschrieben wird. Gemäß Figur 6 erfolgt das Fertigschleifen des Profilabschnittes 10c. Der Profilabschnitt 10c ist im vorliegenden Beispiel als eine schrägverzahnte Verzahnung ausgebildet, wobei das Schleifen mit einer galvanisch belegten oder keramisch gebundenen Schleifscheibe 21 erfolgt. Eine keramisch gebundene Schleifscheibe kann vorzugsweise eingesetzt werden, um den Profilabschnitt 10c fertigzuschleifen. Das Fertigschleifen erfolgt in an sich bekannter Weise durch ein interpolierendes Verfahren der verschiedenen CNC-gesteuerten Achsen für die zweite Schleifscheibe 21. Es versteht sich, dass zum Erreichen einer sehr hohen Genauigkeit die galvanisch belegten Schleifscheiben 21 für das Fertigschleifen eine sehr hohe Genauigkeit aufweisen müssen. Bei Verwendung von keramisch gebundenen Schleifscheiben 21 werden diese durch Abrichten mit dem geforderten Profil versehen. Dieser letztere Arbeitsgang ist entbehrlich, sofern die erforderliche Genauigkeit am fertigen Werkstück 10 bereits durch den zuvor beschriebenen Vorschleifvorgang für den Profilabschnitt erreicht werden kann. In einem solchen Fall wäre das in den Figuren 4A, B, C beschriebene Vorschleifen gleich die Fertigschleifoperation. Nachdem die Fertigschleifoperation des Profilabschnittes 10c beendet ist, wird die Aufspannung für das Werkstück gelöst und selbiges mit einem geeigneten Handlingsystem aus der Maschine entnommen.

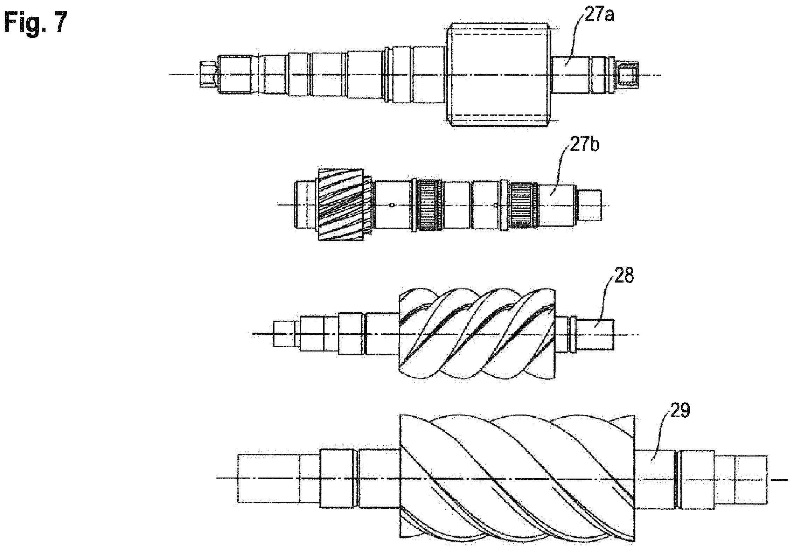

Und schließlich sind in Figur 7 beispielhaft wellenartige Werkstücke gezeichnet, welche mit dem erfindungsgemäßen Verfahren geschliffen werden können. Diese wellenförmigen Werkstücke weisen zylindrische Abschnitte wie auch Profilabschnitte auf. Es handelt sich dabei um eine Getriebewelle 27a, eine weitere Getriebewelle 27b, wobei letztere drei Profilabschnitte aufweist, sowie zwei Rotorwellen 28/29 für Kompressoren, Gebläsevakuumpumpen oder Verdrängerpumpen. Aus diesen nur beispielhaft angegebenen wellenförmigen Bauteilen mit Profilabschnitten wird deutlich, dass es sich bei diesen Bauteilen um hochkomplexe geschliffene Oberflächengestaltungen handelt, welche zudem eine sehr hohe Fertigungsgenauigkeit benötigen, weil diese Wellen mit exakt dazu passenden Wellenkämmen und die jeweiligen Flanken aufeinander abrollen. Wenn die dargestellten Wellen für Kompressoren oder Verdrängerpumpen verwendet werden müssen, sind die Anforderungen noch höher, weil neben dem einfachen Abrollen eine dichtende Funktion in den Profilen beim Kämmen zweier zueinander gefertigter derartiger Wellenzu gewährleisten ist.

In überraschender Weise hat sich nun gezeigt, dass die Schleif-Komplettbearbeitung derartiger relativ kompliziert gestalteter wellenartiger Werkstücke eine einzige während der gesamten Bearbeitung nicht gelöste Aufspannung zur Erzielung von verbesserten Maß-, Lage- und Formgenauigkeiten gerade nicht erfordert.

### Bezugszeichenliste

- 1: Maschinenständer
- 2: Werkstückspindelstock
- 2a: Werkstückspindel
- 2b: Werkstückspindelstockspitze
- 3: Reitstock
- 3a: Reitstockspitze
- 4: Spann- und Rotationsachse
- 5: erster Schleifspindelstock
- 6: Spannfutter
- 6a: Spannbacken
- 8: erste Abrichtspindel
- 9: erste Schleifspindel
- 10: Werkstück / Wellenteil
- 10a: schaftseitiges Wellenende
- 10b: zylindrischer Abschnitt
- 10c: Profilabschnitt
- 11: erste Schleifscheibe
- 12: Schwenkachse (A-Achse)
- 13: Schwenkachse (B-Achse)
- 14: Einrichtung zum Wechseln der Schleifscheibe
- 15: Umsetzungsroboter
- 16: Greifereinheit
- 17: Kühldüsensatz
- 18: Schaltschrank
- 19: senkrechte Führungsbahnen
- 20: zweiter Schleifspindelstock
- 21: zweite Schleifscheibe
- 22: zweite Schleifspindel
- 23: zweite Abrichtspindel
- 24: Kühl-/Schmiermittelschläuche
- 25: Lünettensitz
- 26: Lünette
- 27a: Getriebewelle
- 27b: Getriebewelle
- 28: Rotorwelle für Kompressoren, Gebläse, Vakuumpumpen etc.
- 29: Rotorwelle für Verdrängerpumpen
- 30: Andrücksteuerung

## Patentansprüche

1. Verfahren zum Schleifen von zumindest je einen zylindrischen Abschnitt (10b) und profilierten Abschnitt (10c) aufweisenden Werkstücken (10) auf ein und derselben Schleifmaschine (100), die nur einen Werkstückspindelstock (2) und einen Reitstock (3) aufweist, wobei der zylindrische Abschnitt (10b) mit einer ersten, nicht zylindrisch ausgebildeten Schleifscheibe (11) geschliffen wird, wobei das Werkstück (10) in der Schleifmaschine (100) in einer ersten Aufspannung in einer ersten Schleifoperation geschliffen wird,
**dadurch gekennzeichnet,**
**dass** nach der ersten Schleifoperation die erste Aufspannung derart gelöst wird, dass die Positionierung des Werkstücks in der Schleifmaschine beibehalten wird,
**dass** anschließend eine zweite Aufspannung mit denselben Spannmitteln erzeugt wird, und
**dass** das Werkstück (10) danach in einer zweiten Schleifoperation geschliffen wird und dass der profilierte Abschnitt (10c) mit einer zweiten, profilierten Schleifscheibe (21) durch Profilschleifen hergestellt wird.

2. Verfahren nach Anspruch 1, **dadurch gekennzeichnet, dass** bei weiteren Schleifoperationen die Aufspannung jeweils gelöst und danach das Werkstück (10) wieder gespannt wird, bevor die nachfolgende Schleifoperation beginnt.

3. Verfahren nach Anspruch 2, **dadurch gekennzeichnet, dass** die erste Schleifscheibe (11) auf einem ersten Schleifspindelstock (5) angeordnet ist.

4. Verfahren nach Anspruch 2 oder 3, **dadurch gekennzeichnet, dass** die zweite Schleifscheibe (21) auf einem zweiten Schleifspindelstock (20) angeordnet ist.

5. Verfahren nach einem der Ansprüche 1 bis 4, **dadurch gekennzeichnet, dass** das Werkstück (10) zwischen dessen Spann- und Rotationsachse (4) definierende, in dessen Endseiten eingebrachte Zentrierbohrungen eingreifende Spitzen (2b, 3a) aufgespannt wird, wobei eine der Spitzen (3a) in dem Reitstock (3) angeordnet ist und in der ersten Aufspannung eine axial gerichtete Druckbelastung auf das Werkstück (10) ausübt, welche zum Lösen der Aufspannung in einen drucklosen Zustand überführt wird.

6. Verfahren nach Anspruch 5, **dadurch gekennzeichnet, dass** zum Lösen der Aufspannung die Reitstockspitze (3a) längs ihrer Z-Achse bewegt und außer Eingriff mit der der Reitstockspitze (3a) zuweisenden Zentrierbohrung des Werkstückes (10) gebracht wird.

7. Verfahren nach Anspruch 5 oder 6, **dadurch gekennzeichnet, dass** das Werkstück (10) in seiner Aufspannung mit einer zusätzlichen Spanneinrichtung (6), welche am Außenumfang eines zylindrischen Abschnittes (10b) des Werkstückes (10), insbesondere mittels Spannbacken (6a), angreift, gespannt wird.

8. Verfahren nach einem der Ansprüche 1 bis 7, **dadurch gekennzeichnet, dass** in der ersten Schleifoperation zumindest ein Lünettensitz (25) geschliffen wird, in der zweiten Schleifoperation der profilierte Abschnitt (10c) vorgeschliffen wird, in einer dritten Schleifoperation der zylindrische Abschnitt (10b) und am Werkstück (10) vorhandene Planflächen fertiggeschliffen werden und in einer vierten Schleifoperation der profilierte Abschnitt (10c) fertiggeschliffen wird, wobei zwischen sämtlichen aufeinanderfolgenden Schleifoperationen die Aufspannung jeweils gelöst und danach das Werkstück (10) wieder gespannt wird, bevor die nachfolgende Schleifoperation beginnt.

9. Verfahren nach Anspruch 8, **dadurch gekennzeichnet, dass** eine Lünette (26) zum Abstützen des Werkstückes (10) an den Lünettensitz (25) zugestellt wird, nachdem dieser geschliffen worden ist.

10. Verfahren nach einem der Ansprüche 1 bis 9, **dadurch gekennzeichnet, dass** die zylindrischen Abschnitte (10b) durch Längsschälschleifen oder Einstechschleifen und die profilierten Abschnitte (10c) durch Profilschleifen hergestellt werden.

## Claims

1. Method for grinding workpieces (10), which comprise at least one cylindrical portion (10b) and profiled portion (10c) each, on one and the same grinding machine (100), which comprises only one workpiece headstock (2) and one tailstock (3), wherein the cylindrical portion (10b) is ground with a first non-cylindrically realized grinding disc (11), wherein the workpiece (10) is ground in a first grinding operation in a first setup in the grinding machine (100),
**characterized in that**
the first setup is released after the first grinding operation in such a way that the positioning of the workpiece in the grinding machine is maintained, **in that** then a second setup is created by the same clamping means, and
**in that** the workpiece (10) is subsequently ground in a second grinding operation and **in that** the profiled portion (10c) is produced as a result of profile grinding with a second, profiled grinding disc (21).

2. Method according to Claim 1, **characterized in that**, in the case of further grinding operations, the setup is in each case released and the workpiece (10) is then clamped again before the following grinding operation begins.

3. Method according to Claim 2, **characterized in that** the first grinding disc (11) is arranged on a first grinding headstock (5).

4. Method according to Claim 2 or 3, **characterized in that** the second grinding disc (21) is arranged on a second grinding headstock (20).

5. Method according to one of Claims 1 to 4, **characterized in that** the workpiece (10) is clamped between tips (2b, 3a) which define the clamping and rotation axis (4) thereof and engage in centring bores provided in the end sides thereof, wherein one of the tips (3a) is arranged in the tailstock (3) and in the first setup exerts an axially directed compressive load onto the workpiece (10) which is transferred into a pressureless state to release the setup.

6. Method according to Claim 5, **characterized in that**, for releasing the setup, the tailstock tip (3a) is moved along its Z axis and is disengaged from the centring bore of the workpiece (10) that points to the tailstock tip (3a).

7. Method according to Claim 5 or 6, **characterized in that** the workpiece (10) is clamped in its setup by way of an additional clamping device (6) which cooperates with the outer circumference of a cylindrical portion (10b) of the workpiece (10), in particular by means of clamping jaws (6a).

8. Method according to one of Claims 1 to 7, **characterized in that** in the first grinding operation at least one steady rest seat (25) is ground, in the second grinding operation the profiled portion (10c) is pre-ground, in a third grinding operation the cylindrical portion (10b) and planar surfaces present on the workpiece (10) are finish-ground, and in a fourth grinding operation the profiled portion (10c) is finish-ground, wherein between all the consecutive grinding operations the setup is in each case released and the workpiece (10) is then clamped again before the following grinding operation begins.

9. Method according to Claim 8, **characterized in that** a steady rest (26) is provided for supporting the workpiece (10) on the steady rest seat (25) once said steady rest seat has been ground.

10. Method according to one of Claims 1 to 9, **characterized in that** the cylindrical portions (10b) are produced as a result of longitudinal peel-grinding or plunge grinding and the profiled portions (10c) as a result of profile grinding.

## Revendications

1. Procédé de meulage de pièces (10) présentant au moins à chaque fois une partie cylindrique (10b) et une partie profilée (10c) sur une seule et même rectifieuse (100), qui ne présente qu'une seule poupée porte-pièce (2) et une poupée mobile (3), dans lequel on meule la partie cylindrique (10b) avec une première meule de forme non cylindrique (11), dans lequel on meule la pièce (10) dans la rectifieuse (100) dans un premier serrage dans une première opération de meulage, **caractérisé en ce qu'**après la première opération de meulage, le premier serrage est libéré de telle manière que le positionnement de la pièce dans la rectifieuse soit maintenu, **en ce que** l'on produit ensuite un deuxième serrage avec les mêmes moyens de serrage, et **en ce que** l'on meule ensuite la pièce (10) dans une deuxième opération de meulage et **en ce que** l'on produit la partie profilée (10c) par meulage de profils avec une deuxième meule profilée (21).

2. Procédé selon la revendication 1, **caractérisé en ce que** lors d'autres opérations de meulage, on libère respectivement le serrage et on serre ensuite de nouveau la pièce (10) avant que l'opération de meulage suivante commence.

3. Procédé selon la revendication 2, **caractérisé en ce que** la première meule (11) est disposée sur une première poupée porte-meule (5).

4. Procédé selon la revendication 2 ou 3, **caractérisé en ce que** la deuxième meule (21) est disposée sur une deuxième poupée porte-meule (20).

5. Procédé selon l'une quelconque des revendications 1 à 4, **caractérisé en ce que** l'on serre la pièce (10) entre des pointes (2b, 3a) définissant son axe de serrage et de rotation (4) et s'engageant dans des trous de centrage pratiqués dans ses faces d'extrémité, dans lequel une des pointes (3a) est disposée dans la poupée mobile (3) et exerce sur la pièce (10) dans le premier serrage une charge de pression orientée axialement, qui est convertie en un état sans pression pour la libération du serrage.

6. Procédé selon la revendication 5, **caractérisé en ce que** pour la libération du serrage on déplace la pointe de poupée mobile (3a) le long de son axe Z et on l'amène hors d'engagement avec le trou de centrage de la pièce (10) tourné vers la pointe de poupée mobile (3a).

7. Procédé selon la revendication 5 ou 6, **caractérisé en ce que** l'on serre la pièce (10) dans son serrage avec un dispositif de serrage supplémentaire (6), qui agit, en particulier au moyen de mâchoires de serrage (6a), sur la périphérie extérieure d'une partie cylindrique (10b) de la pièce (10).

8. Procédé selon l'une quelconque des revendications 1 à 7, **caractérisé en ce que** dans la première opération de meulage on meule au moins un siège de lunette (25), dans la deuxième opération de meulage on dégrossit la partie profilée (10c), dans une troisième opération de meulage on effectue le meulage de finition de la partie cylindrique (10b) et des faces planes présentes sur la pièce (10) et dans une quatrième opération de meulage on effectue le meulage de finition de la partie profilée (10c), dans lequel le serrage est à chaque fois libéré entre toutes les opérations de meulage successives et on serre ensuite de nouveau la pièce (10) avant que l'opération de meulage suivante commence.

9. Procédé selon la revendication 8, **caractérisé en ce que** l'on approche du siège de lunette (25) une lunette (26) pour soutenir la pièce (10), après que ce dernier ait été meulé.

10. Procédé selon l'une quelconque des revendications 1 à 9, **caractérisé en ce que** l'on produit les parties cylindriques (10b) par écroûtage longitudinal ou meulage en plongée et les parties profilées (10c) par meulage de profils.
